# EUROPEAN PATENT SPECIFICATION

(11) **EP 0 629 665 B1**
(45) Date of publication and mention of the grant of the patent: **18.12.1996**
(21) Application number: 94107964.2
(22) Date of filing: 24.05.1994
(51) Int. Cl.: C08L 101/00, C08L 63/00, C08G 59/14, C08G 59/34

(54) **Flame-retardant resin composition**
Flammfeste Harzzusammensetzung
Composition de résine ignifugée

(30) Priority: 25.05.1993 JP 122803/93; 19.08.1993 JP 205343/93; 23.08.1993 JP 207330/93; 26.08.1993 JP 211495/93; 01.09.1993 JP 217774/93; 14.09.1993 JP 228390/93; 25.11.1993 JP 295262/93; 25.11.1993 JP 295263/93; 20.01.1994 JP 4814/94; 09.02.1994 JP 15139/94; 17.02.1994 JP 20633/94
(43) Date of publication of application: 21.12.1994
(73) Proprietor: SUMITOMO BAKELITE COMPANY LIMITED, Tokyo 100 (JP)
(72) Inventor: Terao, Masaru, Tarumi-ku, Kobe-shi (JP); Yanagisawa, Kenichi, Nishinomiya-shi (JP)
(74) Representative: Vossius, Volker, Dr.

(56) References cited:
- US-A- 4 063 884
- DATABASE WPI Section Ch, Week 9116 Derwent Publications Ltd., London, GB; Class A17, AN 91-115456 & SU-A-1 564 163 (IZHEVSK MECH INST) , 15 May 1990
- DATABASE WPI Section Ch, Week 9007 Derwent Publications Ltd., London, GB; Class A25, AN 90-049179 & JP-A-02 003 441 (MITSUBISHI GAS CHEM) , 9 January 1990
- DATABASE WPI Section Ch, Week 9420 Derwent Publications Ltd., London, GB; Class A12, AN 94-164132 & JP-A-06 107 927 (KANEBUCHI KAGAKU KOGYO) , 19 April 1994

## Description

The present invention relates to a flame-retardant resin composition superior in low-temperature resistance and flame retardancy, suitably used in various molded articles obtained by injection molding, extrusion, etc.

In general, thermoplastic resins are superior in mechanical properties, heat resistance, electrical properties, moldability, etc. and are in wide use in general industries as electrical device or apparatus parts, automobile parts, precision machine parts, etc. These thermoplastic resins, however, have a drawback of being burnt relatively easily and find limited applications in usages wherein flame retardancy is required, such as electronic and electrical parts (e.g. TV parts), parts used in automobile engine room, and the like. It is therefore required strongly to impart excellent flame retardancy to thermoplastic resins.

Hence, there were made a number of proposals of adding various halogen compounds and phosphorus compounds. These proposals are not satisfactory, because the addition of said flame retardants imparts excellent flame retardancy but reduces the excellent mechanical properties, electrical properties and processability inherently possessed by thermoplastic resins.

The present invention is intended to provide a flame-retardant resin composition of improved flame retardancy using a halogen-free flame-retardant compound, without inviting reduction in inherent properties of thermoplastic resins.

The present inventors made a study on combinations of a thermoplastic resin and a halogen-free flame-retardant compound. As a result, it was found that simple mixing of a thermoplastic resin and a phenolic resin can give improvement in flame retardancy but invites reduction in properties such as low-temperature resistance, heat resistance and the like. It was also found that simple mixing of a thermoplastic resin and a phosphorus-, nitrogen- or boron-containing compound gives insufficient improvement in flame retardancy and further invites bleeding and reduction in properties such as low-temperature resistance, heat resistance and the like.

The present inventors made a further study. As a result, it was found that a melt reaction product between an epoxy-modified resin [component (B) of the present invention] and a halogen-free flame-retardant compound [component (C) of the present invention] can cover the fragility of a phenolic resin, can improve the bleeding of a phosphorus-, nitrogen- or boron-containing compound, and can alleviate the drawbacks of the prior art such as insufficient low-temperature resistance, mechanical properties and the like. The finding has led to the completion of the present invention.

The present invention relates to a flame-retardant resin composition obtained by melt-reacting 100 parts by weight of (A) a thermoplastic resin and 5-100 parts by weight of a melt reaction product between (B) an epoxy-modified resin and (C) a halogen-free flame-retardant compound. Preferably, the present invention relates to a flame-retardant resin composition obtained by melt-kneading 100 parts by weight of (A) a thermoplastic resin, 5-100 parts by weight of a melt reaction product among (B) an epoxy-modified resin, (C) a halogen-free flame-retardant compound, and 0.01-5% by weight, based on the total of (B) and (C), of (E) a catalyst capable of promoting the reaction between (B) and (C), and 3-160 parts by weight of (D) an inorganic hydrate.

The thermoplastic resin used as the component (A) of the present invention is not particularly restricted and may be a commercial product. It is preferably a polyolefin resin, a polystyrene resin or a polyphenylene ether resin.

The polyolefin resin is not particularly restricted and may be a commercial product. The polyolefin resin is preferably a polyethylene resin or a polypropylene resin. Also, a modified polyethylene resin can be used in the present invention. The modified polyethylene resin is not particularly restricted and may be a commercial product. It is exemplified by an ethylene-(meth)acrylic acid copolymer and an ethylene-(meth)acrylic acid ester copolymer [e.g. ethylene-methyl (meth)acrylate copolymer or ethylene-ethyl (meth)acrylate copolymer]. Also, a modified polypropylene resin can be used in the present invention. The modified polypropylene resin is not particularly restricted and may be a commercial product. It is exemplified by an ethylene-propylene copolymer and an ethylene-propylene-diene copolymer. These resins can be used singly or in combination of two or more.

The polystyrene resin is not particularly restricted and may be a commercial product. It is exemplified by homopolymers of styrene or a styrene derivative [e.g. α-substituted styrene (e.g. α-methylstyrene) or vinyltoluene] and copolymers of said monomer as a main component with at least one monomer copolymerizable therewith, such as acrylonitrile, butadiene or isoprene.

The polyphenylene ether resin is not particularly restricted and may be a commercial product. It is exemplified by a poly(2,6-dimethylphenylene-1,4-ether) resin, a poly(2,6-diethylphenylene-1,4-ether) resin, a poly(2-methyl-6-ethylphenylene-1,4-ether) resin and styrene-modified polyphenylene ether resins wherein the proportion of styrene is various.

The epoxy-modified resin, which is the component (B) of the present invention, has a function of suppressing the reduction in the low-temperature resistance and mechanical properties which arises when a thermoplastic resin is mixed with a phenolic resin, which has a relatively low molecular weight and is fragile, and also has a function of suppressing the bleeding and reduction in low-temperature resistance and heat resistance which arise when said thermoplastic resin is mixed with a phosphorus-, nitrogen- or boron-containing compound. Thus, the epoxy-modified resin is a very important component.

That is, the epoxy-modified resin (B) is at least one resin selected from the group consisting of an epoxy-modified polyolefin resin having epoxy groups in the molecule, an epoxide of a hydrogenated block copolymer obtained by hydrogenating a block copolymer comprising at least one polymer block composed mainly of a vinyl aromatic compound and at least one polymer block composed mainly of a conjugated diene compound, an epoxide of a terblock copolymer comprising a polymer block composed mainly of an acrylic resin, at least one polymer block composed mainly of a conjugated diene compound and at least one polymer block composed mainly of a vinyl aromatic compound, and an epoxide of an acrylic resin.

The epoxy-modified polyolefin having epoxy groups in the molecule, used in the present invention is not particularly restricted and may be a commercial product. It is exemplified by an ethylene-glycidyl methacrylate copolymer, a terpolymer between an ethylene-acrylic acid copolymer, an ethylene-methacrylic acid copolymer, an ethylene-acrylate copolymer or an ethylene-methacrylate copolymer and glycidyl methacrylate, and a polypropylene grafted with glycidyl methacrylate.

The epoxy-modified hydrogenated block copolymer having epoxy groups, used in the present invention is not particularly restricted and may be a commercial product. It is exemplified by an epoxidized styrene-ethylene/butylene-styrene block copolymer and an epoxidized styrene-ethylene/propylene-styrene block copolymer.

The epoxy-modified block copolymer used in the present invention can be obtained by adding an epoxy compound having an unsaturated double bond, to a hydrogenated block copolymer to give rise to an addition reaction.

The epoxide of a terblock copolymer comprising a polymer block composed mainly of an acrylic resin, at least one polymer block composed mainly of a conjugated diene compound and at least one polymer block composed mainly of a vinyl aromatic compound and the epoxide of an acrylic resin, both used in the present invention, are not particularly restricted and may be commercial products. They are exemplified by an epoxidized methacrylate-butadiene-styrene copolymer and an epoxidized methyl acrylate resin, respectively.

The phenolic resin used as the component (C) of the present invention is not particularly restricted and may be a commercial product. It can be obtained, for example, by feeding a phenol and formalin into a reactor at a formaldehyde/phenol ratio of 0.5-1.0, adding thereto a catalyst (e.g. oxalic acid, hydrochloric acid, sulfuric acid or toluenesulfonic acid), heating and refluxing the mixture for an appropriate period of time to give rise to a reaction, dehydrating the reaction mixture under vacuum or by allowing the mixture to stand, to remove the separated water, and removing residual water and unreacted phenol. The thus obtained resins and the phenolic resins obtained by co-condensation using a plurality of starting materials are used singly or in combination of two or more.

The phosphorus-, nitrogen- or boron-containing compound having epoxy-reactive functional group, used as the component (C) of the present invention is not particularly restricted and may be a commercial product. The functional group is preferably hydroxyl group, carboxyl group, acid anhydride group, or amino group. The compound is exemplified by phosphorus-containing compounds such as polyphosphoric acid, polyammonium phosphate, amino-, hydroxyl- or carboxyl-containing phosphoric acid esters; boron-containing compounds such as boric acid or zinc borate; melamine and melamine derivatives such as melamine cyanurate, melamine-phosphoric acid salt or melamine borate; and guanidine and guanidine derivatives such as sulfamic acid-guanidine salt or phosphoric acid-guanidine salt.

The inorganic hydrate used as the component (D) of the present invention is used for giving higher flame retardancy. It is not particularly restricted and may be a commercial product. It is exemplified by magnesium hydroxide, aluminum hydroxide and calcium hydroxide.

The catalyst used as the component (E) of the present invention, capable of promoting the reaction between the epoxy-modified resin (B) and the halogen-free flame-retardant compound (C) is not particularly restricted and may be a commercial product. It is exemplified by imidazoles such as dimethylimidazole ; amines and their derivatives such as diazabicycloundecene or dimethylbenzylamine; and organic phosphines and their derivatives such as triphenylphosphine.

The flame-retardant resin composition of the present invention can be obtained by (1) feeding a thermoplastic resin [the component (A)], an epoxy-modified resin [the component (B)] and a halogen-free flame-retardant compound [the component (C)] into a kneader under pressure or a Banbury mixer at one time and melt-kneading them at 150-300°C for 10-30 minutes, or (2) melt-kneading an epoxy-modified resin [the component (B)], a halogen-free flame-retardant compound [the compound (C)] and, if necessary, a catalyst [the component (E)] at 100-300°C for 10-30 minutes, then adding a thermoplastic resin [the component (A)] and other additives and melt-kneading the mixture. The latter method is preferable because it allows for selective mixing of the epoxy-modified resin [the component (B)] and the halogen-free flame-retardant compound [the component (C)].

In the flame-retardant resin composition of the present invention, 100 parts by weight of the thermoplastic resin (A) must be mixed with 5-100 parts by weight of the melt reaction product between the epoxy-modified resin (B) and the halogen-free flame-retardant compound (C).

When the amount of the melt reaction product between the epoxy-modified resin (B) and the halogen-free flame-retardant compound (C) is less than 5 parts by weight, the resulting flame-retardant resin composition has insufficient flame retardancy. When the amount is more than 100 parts by weight, the properties of the thermoplastic resin are reduced in the resulting flame-retardant resin composition.

When the amount of the catalyst (E) capable of promoting the reaction between the epoxy-modified resin (B) and the halogen-free flame-retardant compound (C) is less than 0.01% by weight based on the total of (B) and (C), the effect of promoting said reaction is insufficient. When the amount is more than 5% by weight, said effect does not show substantial increase any more.

The flame-retardant resin composition of the present invention has high flame retardancy without substantially reducing the properties of the thermoplastic resin [the component(A)]. The reason is presumed to be that the reaction product between the epoxy-modified resin [the component (B)] and the halogen-free flame-retardant compound [the component (C)] has, in the molecule, a moiety compatible with the thermoplastic resin (A) and a moiety compatible with the halogen-free flame-retardant compound (C) and, as a result, the fine dispersion of the halogen-free flame-retardant compound (C) in the thermoplastic resin (A) becomes possible.

The flame-retardant resin composition of the present invention can further contain, depending upon the application and purpose, other components such as inorganic filler (e.g. talc, mica, calcium carbonate or wollastonite), coupling agent, reinforcing agent (e.g. glass fiber or carbon fiber), flame-retardant assistant, antistatic agent, stabilizer, pigment, releasing agent, impact resistance improver (e.g elastomer).

The flame-retardant resin composition of the present invention can be easily processed into molded articles by a method used in ordinary processing of thermoplastic resins, such as injection molding or extrusion.

The present invention is hereinafter described specifically by way of Examples.

### Examples 1-8 and Comparative Examples 1-12

Flame-retardant resin compositions were prepared as follows. When a polyolefin resin or a polystyrene resin was used as the component (A), the polyolefin or polystyrene resin (A), an epoxy-modified resin (B), a halogen-free flame-retardant compound (C) and an inorganic hydrate (D) were fed at one time and were melt-kneaded using a kneader, at 190°C for 30 minutes. When a polyphenylene ether resin was used as the component (A), the polyphenylene ether resin (A), an epoxy-modified resin (B), a halogen-free flame-retardant compound (C) and an inorganic hydrate (D) were fed at one time and were melt-kneaded using a kneader, at 300°C for 30 minutes. Each of the resulting flame-retardant resin compositions was extruded into a sheet, and various test pieces were prepared from the sheet.

Tensile test was conducted in accordance with ASTM D 638; heat-deformation temperature was measured in accordance with ASTM D 648 (4.6 kgf/cm²); Izod impact test was conducted in accordance with JIS K 6871; low-temperature resistance was measured in accordance with JIS K 6301; oxygen index was measured in accordance with ASTM D 2863; and burning test was conducted in accordance with the safety standard UL 94 of Underwriters Laboratories and its evaluation was made according to the following yardstick.
○ : burning time = shorter than 10 seconds
△ : burning time = 10 seconds or longer
x : completely burnt

The compounding recipe and evaluation results of each composition prepared above are shown in Tables 1-4.

The components used in each composition are as follows.

### Component (A)

Polyolefin resin
   - PE:: a polyethylene manufactured by Mitsui Petrochemical Industries, Ltd., Ultrazex 2022 L (trade name)
   - EMMA:: a methyl methacrylate-modified polyethylene manufactured by Sumitomo Chemical Co., Ltd., Acryft WH102 (trade name)
   - PP:: a polypropylene manufactured by Sumitomo Chemical Co., Ltd., Sumitomo Noblen H501 (trade name)
Polystyrene resin
   - PS:: a polystyrene manufactured by Showa Denko K.K., Esbrite 500A (trade name)
   - ABS:: an ABS resin manufactured by Mitsubishi Rayon Co., Ltd., Diapet ABS RSE-7 (trade name)
Polyphenylene ether resin
   - PPE (1):: a polyphenylene ether manufactured by ASAHI CHEMICAL INDUSTRY CO., LTD., Xyron X0061 (trade name)
   - PPE (2):: a polyphenylene ether manufactured by MITSUBISHI GAS CHEMICAL CO., INC., Iupiace AV40 (trade name)
Component (B)
   - EP-PO:: an epoxy-modified polyolefin manufactured by Sumitomo Chemical Co., Ltd., Bond Fast 20M (trade name)
   - EP-SEBS:: an epoxy-modified styrene-ethylene/butylene-styrene block copolymer manufactured by ASAHI CHEMICAL INDUSTRY CO., LTD., Tuftec Z-514 (trade name)
Component (C)
   - PN:: a straight phenol novolac resin manufactured by Sumitomo Durez, Sumilite Resin PR-51470 (trade name)
   - AA-1000:: an amino group-containing phosphoric acid ester manufactured by Nippon Soda Co., Ltd.
   - CR-757:: a hydroxyl group-containing phosphoric acid ester manufactured by Daihachi Kagaku K.K.
   - PX-201:: a condensed phosphoric acid ester manufactured by Daihachi Kagaku K.K.
   - MPP-A:: phosphoric acid-melamine salt manufactured by Sanwa Chemical.
   Boric acid
Component (D)
   Mg(OH)₂
   Al(OH)₃
Component (E)
   - TPP:: triphenylphosphine

**Table 1**

| (Polyolefin resins) | | | | |
|---|---|---|---|---|
| | Examples | | | |
| | 1 | 2 | 3 | 4 |
| Compounding (parts by weight) | | | | |
| PE | 100 | | 100 | |
| PP | | 100 | | 100 |
| PN | 21 | 16 | 25 | 9 |
| EP-PO | 9 | | 25 | |
| EP-SEBS | | 24 | | |
| Mg(OH)₂ | 100 | 100 | | |
| Al(OH)₃ | | | 100 | 100 |

| Properties | | | | |
|---|---|---|---|---|
| Oxygen index | 31.0 | 31.2 | 32.4 | 31.2 |
| Low-temperature resistance (°C) | -60 | -56 | -54 | -59 |
| Tensile strength (Kg/cm²) | 150 | 280 | 120 | 260 |
| Tensile elongation (%) | 530 | 520 | 480 | 510 |
| UL94 First firing | o | o | o | o |
| Second firing | o | o | o | o |
| Melt drops | None | None | None | None |

**Table 2**

| (Polyolefin resins) | | | | | | |
|---|---|---|---|---|---|---|
| | Comparative Examples | | | | | |
| | 1 | 2 | 3 | 4 | 5 | 6 |
| Compounding (parts by weight) | | | | | | |
| PE | 100 | | 100 | | 100 | |
| PP | | 100 | | 100 | | 100 |
| PN | | | 40 | | 90 | 2 |
| EP-PO | | | | 40 | 20 | |
| EP-SEBS | | | | | | 2 |
| Mg(OH)₂ | 100 | 100 | 100 | | | |
| Al(OH)₃ | | | | 100 | 100 | 100 |

| Properties | | | | | | |
|---|---|---|---|---|---|---|
| Oxygen index | 28.1 | 28.3 | 30.9 | 28.2 | 30.9 | 29.2 |
| Low-temperature resistance (°C) | -50 | -59 | -20 | -48 | -10 | -28 |
| Tensile strength (Kg/cm²) | 170 | 260 | 160 | 250 | 100 | 260 |
| Tensile elongation (%) | 670 | 650 | 320 | 550 | 220 | 520 |
| UL94 First firing | x | x | o | x | o | x |
| Second firing | x | x | x | x | x | x |
| Melt drops | Present | Present | none | Present | none | Present |

**Table 3**

| (Polystyrene or polyphenylene ether resin) | | | | |
|---|---|---|---|---|
| | Examples | | | |
| | 5 | 6 | 7 | 8 |
| Compounding (parts by weight) | | | | |
| PS | 100 | | 100 | |
| PPE (1) | | 100 | | 100 |
| PN | 21 | 16 | 25 | 9 |
| EP-SEBS | 9 | 24 | 25 | 21 |
| Mg(OH)₂ | 100 | 100 | | |
| Al(OH)₃ | | | 100 | 100 |

| Properties | | | | |
|---|---|---|---|---|
| Tensile strength (Kg/cm²) | 250 | 500 | 240 | 520 |
| Tensile elongation (%) | 40 | 50 | 60 | 55 |
| UL94 First firing | o | o | o | o |
| Second firing | o | o | o | o |
| Melt drops | None | None | None | None |

**Table 4**

| (Polystyrene or polyphenylene ether resin) | | | | | | |
|---|---|---|---|---|---|---|
| | Comparative Examples | | | | | |
| | 7 | 8 | 9 | 10 | 11 | 12 |
| Compounding (parts by weight) | | | | | | |
| PS | 100 | | 100 | | 100 | |
| PPE (1) | | 100 | | 100 | | 100 |
| PN | | | 40 | | 80 | 2 |
| EP-SEBS | | | | 40 | 30 | 2 |
| Mg(OH)₂ | 100 | 100 | 100 | | | |
| Al(OH)₃ | | | | 100 | 100 | 100 |

| Properties | | | | | | |
|---|---|---|---|---|---|---|
| Tensile strength (Kg/cm²) | 270 | 560 | 120 | 480 | 90 | 520 |
| Tensile elongation (%) | 70 | 50 | 20 | 58 | 20 | 35 |
| UL94 First firing | x | x | o | x | o | x |
| Second firing | x | x | x | x | o | x |
| Melt drops | Present | Present | none | Present | none | Present |

### Examples 9-57 and Comparative Examples 13-47

These illustrate cases wherein the component (B) and the component (C) are melt-reacted in advance.

Melt reaction products A to R were obtained by using the compounding recipes shown in Tables 5-8 and by using the following methods.
(1) An epoxy-modified resin (B), a halogen-free flame-retardant compound (C) (a phenol novolac resin, an amino group-containing phosphoric acid ester, a hydroxyl group-containing phosphoric acid ester or boric acid) and, if necessary, a catalyst (E) are melt-reacted using a kneader under pressure at 150°C for 30 minutes.
(2) An epoxy-modified resin (B), a halogen-free flame-retardant compound (C) (a condensed phosphoric acid ester or phosphoric acid-melamine salt) and, if necessary, a catalyst (E) are melt-reacted using a kneader under pressure at 200°C for 30 minutes.

The reaction between the epoxy-modified resin (B) and the halogen-free flame-retardant compound (C) was confirmed by the difference in the peak intensity of IR absorption spectrum of epoxy group before and after the reaction.

**Table 5**

| (For polyolefin resins) | | | | |
|---|---|---|---|---|
| | Reaction Products | | | |
| | A | B | C | D |
| Compounding (parts by weight) | | | | |
| EP-SEBS | 80 | 80 | | |
| EP-PO | | | 60 | 60 |
| PN | 20 | 20 | 40 | 40 |
| TPP | | 0.1 | | 0.1 |
| PX-201 | | 30 | | |
| Boric acid | | | | 30 |

**Table 6**

| (For polystyrene or polyphenylene ether resins) | | | | |
|---|---|---|---|---|
| | Reaction Products | | | |
| | E | F | G | H |
| Compounding (parts by weight) | | | | |
| EP-SEBS | 80 | 80 | 60 | 60 |
| PN | 20 | 20 | 40 | 40 |
| TPP | | 0.1 | | 0.1 |
| PX-201 | | 30 | | |
| Boric acid | | | | 30 |

**Table 7**

| (For polyolefin resins) | | | | | |
|---|---|---|---|---|---|
| | Reaction Products | | | | |
| | I | J | K | L | M |
| Compounding (parts by weight) | | | | | |
| EP-SEBS | 50 | 50 | 50 | | |
| EP-PO | | | | 40 | 40 |
| AA-1000 | 50 | | | | |
| CR-757 | | 50 | 50 | | |
| MPP-A | | | | 60 | 60 |
| PN | | | 20 | | 20 |
| TPP | | 1 | 1 | | 1 |

**Table 8**

| (For polystyrene or polyphenylene ether resins) | | | | | |
|---|---|---|---|---|---|
| | Reaction Products | | | | |
| | N | O | P | Q | R |
| Compounding (parts by weight) | | | | | |
| EP-SEBS | 50 | 50 | 50 | 40 | 40 |
| AA-1000 | 50 | | | | |
| CR-757 | | 50 | 50 | | |
| MPP-A | | | | 60 | 60 |
| PN | | | 20 | 20 | |
| TPP | | 1 | 1 | | 1 |

Then, the components (A) and, if necessary, the component (D) were mixed with the melt reaction product obtained above, as follows.

When the component (A) was a polyolefin resin or a polystyrene resin, melt kneading was conducted by a kneader under pressure at 190°C for 30 minutes, using a compounding recipe shown in Tables 9-26. When the component (A) was a polyphenylene ether resin, melt kneading was conducted by a kneader under pressure at 300°C for 30 minutes, using a compounding recipe shown in Tables 9-26. Each of the obtained flame-retardant resin compositions was extruded into a sheet, and various test pieces were prepared from the sheet. Evaluation of various tests was made in the same manners as described above. The results are shown in Tables 9-26.

**Table 9**

| (Polyolefin resins) | | | | | | |
|---|---|---|---|---|---|---|
| | Examples | | | | | |
| | 9 | 10 | 11 | 12 | 13 | 14 |
| Compounding (parts by weight) | | | | | | |
| PE | 100 | 100 | | | | |
| EMMA | | | 100 | 100 | | |
| PP | | | | | 100 | 100 |
| Reaction product A | 20 | | | | 20 | |
| Reaction product B | | 20 | | | | 20 |
| Reaction product C | | | 40 | | | |
| Reaction product D | | | | 40 | | |
| Mg(OH)₂ | 100 | 100 | | | 100 | |
| Al(OH)₃ | | | 100 | 100 | | 100 |

| Properties | | | | | | |
|---|---|---|---|---|---|---|
| Oxygen index | 29.9 | 32.9 | 30.1 | 33.1 | 28.1 | 30.2 |
| Low-temperature resistance (°C) | -56 | -52 | -58 | -50 | -48 | -46 |
| Tensile strength (Kg/cm²) | 130 | 120 | 125 | 120 | 280 | 240 |
| Tensile elongation (%) | 550 | 520 | 550 | 500 | 480 | 460 |
| UL94 First firing | o | o | o | o | o | o |
| Second firing | Δ | o | Δ | o | Δ | o |
| Melt drops | None | None | None | None | None | None |

**Table 10**

| (Polyolefin resins) | | | | |
|---|---|---|---|---|
| | Comparative Example | | | |
| | 13 | 14 | 15 | 16 |
| Compounding (parts by weight) | | | | |
| PE | 100 | | 100 | |
| EMMA | | 100 | | 100 |
| Reaction Product A | | | 2 | |
| Reaction product B | | | | 110 |
| Mg(OH)₂ | 100 | 100 | | |
| Al(OH)₃ | | | 100 | 100 |

| Properties | | | | |
|---|---|---|---|---|
| Oxygen index | 28.0 | 28.2 | 30.9 | 30.9 |
| Low-temperature resistance (°C) | -58 | -56 | -35 | -18 |
| Tensile strength (Kg/cm²) | 130 | 135 | 140 | 100 |
| Tensile elongation (%) | 570 | 650 | 530 | 200 |
| UL94 First firing | x | x | x | o |
| Second firing | x | x | x | o |
| Melt drops | Present | Present | Present | None |

**Table 11**

| (Polyolefin resin) | | | |
|---|---|---|---|
| | Comparative Examples | | |
| | 17 | 18 | 19 |
| Compounding (parts by weight) | | | |
| PP | 100 | 100 | 100 |
| Reaction Product A | | 2 | |
| Reaction Product B | | | 110 |
| Mg(OH)₂ | 100 | 100 | |
| Al(OH)₃ | | | 100 |

| Properties | | | |
|---|---|---|---|
| Oxygen index | 26.2 | 28.2 | 34.2 |
| Low-temperature resistance (°C) | -48 | -46 | -16 |
| Tensile strength (Kg/cm²) | 280 | 240 | 190 |
| Tensile elongation (%) | 480 | 460 | 160 |
| UL94 First firing | x | x | o |
| Second firing | x | x | o |
| Melt drops | Present | Present | None |

**Table 12**

| (Polystyrene resins) | | | | |
|---|---|---|---|---|
| | Examples | | | |
| | 15 | 16 | 17 | 18 |
| Compounding (parts by weight) | | | | |
| PS | 100 | 100 | | |
| ABS | | | 100 | 100 |
| Reaction product E | 20 | | | |
| Reaction product F | | 20 | | |
| Reaction product G | | | 40 | |
| Reaction product H | | | | 40 |
| Mg(OH)₂ | 80 | 80 | | |
| Al(OH)₃ | | | 80 | 80 |

| Properties | | | | |
|---|---|---|---|---|
| Tensile strength (Kg/cm²) | 250 | 240 | 400 | 390 |
| Tensile elongation (%) | 40 | 35 | 52 | 50 |
| Izod test (Kg·cm/cm) | 8.8 | 8.4 | 30 | 29 |
| UL94 First firing | o | o | o | o |
| Second firing A | Δ | o | Δ | o |
| Melt drops | None | None | None | None |

**Table 13**

| (Polystyrene resins) | | | | | | |
|---|---|---|---|---|---|---|
| | Comparative Examples | | | | | |
| | 20 | 21 | 22 | 23 | 24 | 25 |
| Compounding (parts by weight) | | | | | | |
| PS | 100 | | 100 | 100 | | |
| ABS | | 100 | | | 100 | 100 |
| Reaction product E | | | 2 | | | |
| Reaction product F | | | | 110 | | |
| Reaction product G | | | | | 2 | |
| Reaction product H | | | | | | 110 |
| Al(OH)₃ | 80 | 80 | | | | 80 |
| Mg(OH)₂ | | | 80 | 80 | 80 | |

| Properties | | | | | | |
|---|---|---|---|---|---|---|
| Tensile strength (Kg/cm²) | 260 | 410 | 250 | 100 | 460 | 150 |
| Tensile elongation (%) | 45 | 58 | 44 | 10 | 56 | 10 |
| Izod test (Kg·cm/cm) | 9.0 | 32 | 9.0 | 4.0 | 34 | 10 |
| UL94 First firing | x | x | x | o | x | o |
| Second firing | x | x | x | o | x | o |
| Melt drops | Present | Present | Present | None | Present | None |

**Table 14**

| (Polyphenylene ether resins) | | | | |
|---|---|---|---|---|
| | Examples | | | |
| | 19 | 20 | 21 | 22 |
| Compounding (parts by weight) | | | | |
| PPE (1) | 100 | 100 | | |
| PPE (2) | | | 100 | 100 |
| Reaction product E | 50 | | | |
| Reaction product F | | 50 | | |
| Reaction product G | | | 60 | |
| Reaction product H | | | | 60 |

| Properties | | | | |
|---|---|---|---|---|
| Tensile strength (Kg/cm²) | 460 | 450 | 440 | 420 |
| Heat-deformation temperature (°C) | 110 | 108 | 100 | 98 |
| UL94 First firing | o | o | o | o |
| Second firing | Δ | o | Δ | o |
| Melt drops | None | None | None | None |

**Table 15**

| (Polyphenylene ether resins) | | | | | | |
|---|---|---|---|---|---|---|
| | Comparative Examples | | | | | |
| | 26 | 27 | 28 | 29 | 30 | 31 |
| Compounding (parts by weight) | | | | | | |
| PPE (1) | 100 | | 100 | 100 | | |
| PPE (2) | | 100 | | | 100 | 100 |
| Reaction product E | | | 2 | | | |
| Reaction product F | | | | 110 | | |
| Reaction product G | | | | | 2 | |
| Reaction product H | | | | | | 110 |

| Properties | | | | | | |
|---|---|---|---|---|---|---|
| Tensile strength (Kg/cm²) | 500 | 500 | 480 | 200 | 490 | 120 |
| Heat-deformation temperature (°C) | 120 | 110 | 110 | 50 | 120 | 60 |
| UL94 First firing | x | x | x | o | x | o |
| Second firing | x | x | x | o | x | o |
| Melt drops | Present | Present | Present | None | Present | None |

**Table 16**

| (Polyolefin resins) | | | | | |
|---|---|---|---|---|---|
| | Examples | | | | |
| | 23 | 24 | 25 | 26 | 27 |
| Compounding (parts by weight) | | | | | |
| PE | 100 | 100 | 100 | | |
| EMMA | | | | 100 | 100 |
| Reaction product I | 30 | | | | |
| Reaction product J | | 30 | | | |
| Reaction product K | | | 30 | | |
| Reaction product L | | | | 30 | |
| Reaction product M | | | | | 30 |

| Properties | | | | | |
|---|---|---|---|---|---|
| Oxygen index | 30.7 | 31.6 | 31.9 | 31.1 | 31.9 |
| Low-temperature resistance (°C) | -58 | -60 | -58 | -56 | -52 |
| Tensile strength (Kg/cm²) | 110 | 105 | 100 | 115 | 100 |
| Tensile elongation (%) | 620 | 590 | 520 | 560 | 480 |
| UL94 First firing | o | o | o | o | o |
| Second firing | Δ | Δ | Δ | Δ | Δ |
| Melt drops | None | None | None | None | None |

**Table 17**

| (Polyolefin resins) | | | | | |
|---|---|---|---|---|---|
| | Examples | | | | |
| | 28 | 29 | 30 | 31 | 32 |
| Compounding (parts by weight) | | | | | |
| PE | 100 | 100 | 100 | | |
| EMMA | | | | 100 | 100 |
| Reaction product I | 15 | | | | |
| Reaction product J | | 15 | | | |
| Reaction product K | | | 15 | | |
| Reaction product L | | | | 15 | |
| Reaction product M | | | | | 15 |
| Mg(OH)₂ | 80 | 80 | 80 | 80 | 80 |

| Properties | | | | | |
|---|---|---|---|---|---|
| Oxygen index | 34.6 | 35.2 | 36.4 | 34.8 | 35.2 |
| Low-temperature resistance (°C) | -58 | -52 | -48 | -50 | -46 |
| Tensile strength (Kg/cm²) | 135 | 115 | 100 | 110 | 100 |
| Tensile elongation (%) | 480 | 500 | 500 | 480 | 460 |
| UL94 First firing | o | o | o | o | o |
| Second firing | o | o | o | o | o |
| Melt drops | None | None | None | None | None |

**Table 18**

| (Polyolefin resins) | | | | | |
|---|---|---|---|---|---|
| | Examples | | | | |
| | 33 | 34 | 35 | 36 | 37 |
| Compounding (parts by weight) | | | | | |
| PP | 100 | 100 | 100 | 100 | 100 |
| Reaction product I | 30 | | | | |
| Reaction product J | | 30 | | | |
| Reaction product K | | | 30 | | |
| Reaction product L | | | | 30 | |
| Reaction product M | | | | | 30 |

| Properties | | | | | |
|---|---|---|---|---|---|
| Oxygen index | 31.7 | 31.6 | 32.2 | 31.4 | 32.1 |
| Low-temperature resistance (°C) | -60 | -62 | -60 | -59 | -59 |
| Tensile strength (Kg/cm²) | 310 | 300 | 295 | 300 | 295 |
| Tensile elongation (%) | 520 | 490 | 440 | 520 | 480 |
| UL94 First firing | o | o | o | o | o |
| Second firing | Δ | Δ | Δ | Δ | Δ |
| Melt drops | None | None | None | None | None |

**Table 19**

| (Polyolefin resins) | | | | | |
|---|---|---|---|---|---|
| | Examples | | | | |
| | 38 | 39 | 40 | 41 | 42 |
| Compounding (parts by weight) | | | | | |
| PP | 100 | 100 | 100 | 100 | 100 |
| Reaction product I | 15 | | | | |
| Reaction product J | | 15 | | | |
| Reaction product K | | | 15 | | |
| Reaction product L | | | | 15 | |
| Reaction product M | | | | | 15 |
| Mg(OH)₂ | 80 | 80 | 80 | 80 | 80 |

| Properties | | | | | |
|---|---|---|---|---|---|
| Oxygen index | 35.6 | 36.2 | 36.5 | 35.3 | 36.4 |
| Low-temperature resistance (°C) | -58 | -52 | -50 | -56 | -52 |
| Tensile strength (Kg/cm²) | 295 | 290 | 285 | 290 | 280 |
| Tensile elongation (%) | 480 | 460 | 480 | 480 | 440 |
| UL94 First firing | o | o | o | o | o |
| Second firing | o | o | o | o | o |
| Melt drops | None | None | None | None | None |

**Table 20**

| (Polyolefin resins) | | | | | |
|---|---|---|---|---|---|
| | Comparative Examples | | | | |
| | 32 | 33 | 34 | 35 | 36 |
| Compounding (parts by weight) | | | | | |
| PE | 100 | | 100 | | |
| EMMA | | 100 | | 100 | 100 |
| Reaction product I | | | 3 | | |
| Reaction product J | | | | 110 | |
| Reaction product K | | | | | 110 |
| Mg(OH)2 | 80 | 80 | 80 | 80 | 80 |

| Properties | | | | | |
|---|---|---|---|---|---|
| Oxygen index | 33.0 | 28.8 | 33.4 | 29.8 | 33.4 |
| Low-temperature resistance (°C) | -48 | -48 | -49 | -18 | -15 |
| Tensile strength (Kg/cm²) | 95 | 115 | 100 | 115 | 85 |
| Tensile elongation (%) | 270 | 450 | 220 | 500 | 220 |
| UL94 First firing | x | x | x | o | o |
| Second firing | x | x | x | o | o |
| Melt drops | Present | Present | Present | none | none |

**Table 21**

| (Polyolefin resin) | | | |
|---|---|---|---|
| | Comparative Examples | | |
| | 37 | 38 | 39 |
| Compounding (parts by weight) | | | |
| PP | 100 | 100 | 100 |
| Reaction Product I | | 110 | |
| Reaction Product J | | | 3 |
| Mg(OH)₂ | 80 | 80 | 80 |

| Properties | | | |
|---|---|---|---|
| Oxygen index | 28.2 | 38.2 | 28.5 |
| Low-temperature resistance (°C) | -58 | -15 | -52 |
| Tensile strength (Kg/cm²) | 280 | 125 | 295 |
| Tensile elongation (%) | 570 | 250 | 540 |
| UL94 First firing | x | o | x |
| Second firing | x | o | x |
| Melt drops | Present | None | Present |

**Table 22**

| (Polystyrene resins) | | | | | |
|---|---|---|---|---|---|
| | Examples | | | | |
| | 43 | 44 | 45 | 46 | 47 |
| Compounding (parts by weight) | | | | | |
| PS | 100 | 100 | 100 | | |
| ABS | | | | 100 | 100 |
| Reaction product N | 30 | | | | |
| Reaction product O | | 30 | | | |
| Reaction product P | | | 30 | | |
| Reaction product Q | | | | 30 | |
| Reaction product R | | | | | 30 |

| Properties | | | | | |
|---|---|---|---|---|---|
| Tensile strength (Kg/cm²) | 230 | 240 | 200 | 350 | 400 |
| Tensile elongation (%) | 30 | 28 | 20 | 15 | 20 |
| Izod test (Kg·cm/cm) | 9.0 | 8.8 | 7.8 | 25 | 30 |
| UL94 First firing | o | o | o | o | o |
| Second firing | Δ | Δ | Δ | Δ | Δ |
| Melt drops | None | None | None | None | None |

**Table 23**

| (Polystyrene resins) | | | | | |
|---|---|---|---|---|---|
| | Examples | | | | |
| | 48 | 49 | 50 | 51 | 52 |
| Compounding (parts by weight) | | | | | |
| PS | 100 | 100 | 100 | | |
| ABS | | | | 100 | 100 |
| Reaction product N | 15 | | | | |
| Reaction product O | | 15 | | | |
| Reaction product P | | | 15 | | |
| Reaction product Q | | | | 15 | |
| Reaction product R | | | | | 15 |
| Mg(OH)₂ | 80 | 80 | 80 | 80 | 80 |

| Properties | | | | | |
|---|---|---|---|---|---|
| Tensile strength (Kg/cm²) | 210 | 220 | 180 | 320 | 360 |
| Tensile elongation (%) | 20 | 19 | 16 | 10 | 15 |
| Izod test (Kg·cm/cm) | 8.6 | 8.2 | 7.2 | 20 | 26 |
| UL94 First firing | o | o | o | o | o |
| Second firing | o | o | o | o | o |
| Melt drops | None | None | None | None | None |

**Table 24**

| (Polystyrene resins) | | | | |
|---|---|---|---|---|
| | Comparative Examples | | | |
| | 40 | 41 | 42 | 43 |
| Compounding (parts by weight) | | | | |
| PS | | 100 | 100 | |
| ABS | 100 | | | 100 |
| Reaction Product N | | | 2 | |
| Reaction Product O | | | | 110 |
| Mg(OH)₂ | 80 | 80 | 80 | 80 |

| Properties | | | | |
|---|---|---|---|---|
| Tensile strength (Kg/cm²) | 390 | 100 | 220 | 120 |
| Tensile elongation (%) | 15 | 10 | 30 | 12 |
| Izod test (Kg·cm/cm) | 28 | 6.0 | 9.2 | 14 |
| UL94 First firing | x | x | x | o |
| Second firing | x | x | x | o |
| Melt drops | Present | None | Present | None |

**Table 25**

| (Polyphenylene ether resins) | | | | | |
|---|---|---|---|---|---|
| | Examples | | | | |
| | 53 | 54 | 55 | 56 | 57 |
| Compounding (parts by weight) | | | | | |
| PPE (1) | 100 | 100 | 100 | | |
| PPE (2) | | | | 100 | 100 |
| Reaction Product N | 15 | | | | |
| Reaction Product O | | 40 | | | |
| Reaction Product P | | | 15 | | |
| Reaction Product Q | | | | 40 | |
| Reaction Product R | | | | | 40 |

| Properties | | | | | |
|---|---|---|---|---|---|
| Tensile strength (Kg/cm²) | 500 | 480 | 510 | 460 | 470 |
| Heat-deformation temperature (°C) | 120 | 110 | 115 | 110 | 105 |
| UL94 First firing | o | o | o | o | o |
| Second firing | Δ | o | Δ | o | o |
| Melt drops | None | None | None | None | None |

**Table 26**

| (Polyphenylene ether resins) | | | | |
|---|---|---|---|---|
| | Comparative Examples | | | |
| | 44 | 45 | 46 | 47 |
| Compounding (parts by weight) | | | | |
| PPE (1) | | 100 | 100 | |
| PPE (2) | 100 | | | 100 |
| Reaction Product N | | | 2 | |
| Reaction Product O | | | | 110 |

| Properties | | | | |
|---|---|---|---|---|
| Tensile strength (Kg/cm²) | 500 | 250 | 510 | 200 |
| Heat-deformation temperature (°C) | 120 | 60 | 120 | 50 |
| UL94 First firing | x | x | x | o |
| Second firing | x | x | x | o |
| Melt drops | Present | Present | Present | None |

As clear from the foregoing tables, the flame-retardant resin compositions of the present invention are novel materials in which flame retardancy is significantly improved with the properties of thermoplastic resin being retained.

That is, the polyolefin resin compositions of the present invention have high flame retardancy and give a molded article which causes no bleeding on the surface and which generates neither corrosive gas nor hazardous gas during processing or combustion.

The polystyrene resin compositions of the present invention have flame retardancy and impact resistance and give a molded article which causes no bleeding on the surface and which generates neither corrosive gas nor hazardous gas during processing or combustion.

The polyphenylene ether resin compositions of the present invention have flame retardancy and heat resistance and give a molded article which causes no bleeding on the surface and which generates neither corrosive gas nor hazardous gas during processing or combustion.

## Claims

1. A flame-retardant resin composition obtainable by melt-kneading 100 parts by weight of (A) a thermoplastic resin and 5-100 parts by weight of a melt reaction product between (B) at least one epoxy-modified resin and (C) at least one halogen-free flame-retardant compound, said at least one epoxy-modified resin (B) being selected from the group consisting of an epoxy-modified polyolefin resin having epoxy groups in the molecule, an epoxide of a hydrogenated block copolymer obtained by hydrogenating a block copolymer comprising at least one polymer block composed mainly of a vinyl aromatic compound and at least one polymer block composed mainly of a conjugated diene compound, an epoxide of a terblock copolymer comprising a polymer block composed mainly of an acrylic resin, at least one polymer block composed mainly of a conjugated diene compound and at least one polymer block composed mainly of a vinyl aromatic compound, and an epoxide of an acrylic resin, said at least one halogen-free flame-retardant compound (C) being selected from the group consisting of a phenolic resin and phosphorus-, nitrogen- and boron-containing compounds having epoxy-reactive functional groups.

2. A flame-retardant resin composition according to Claim 1, obtainable by melt-kneading 100 parts by weight of the thermoplastic resin (A), 5-100 parts by weight of a melt reaction product between 20-80% by weight of the epoxy-modified resin (B) and 80-20% by weight of the halogen-free flame-retardant compound (C), and 30-160 parts by weight of (D) an inorganic hydrate.

3. A flame-retardant resin composition according to Claim 1, obtainable by melt-kneading 100 parts by weight of the thermoplastic resin (A) and 5-100 parts by weight of a melt reaction product among 20-80% by weight of the epoxy-modified resin (B), 80-20% by weight of the halogen-free flame-retardant compound (C) and 0.01-5% by weight, based on the total of (B) and (C), of (E) at least one catalyst capable of promoting the reaction between (B) and (C), selected from the group consisting of an imidazole, an amine and a derivative thereof, and an organic phosphine and a derivative thereof.

4. A flame-retardant resin composition according to Claim 3, obtainable by melt-kneading 100 parts by weight of the thermoplastic resin (A), 5-100 parts by weight of the melt reaction product among 20-80% by weight of the epoxy-modified resin (B), 80-20% by weight of the halogen-free flame-retardant compound (C) and 0.01-5% by weight, based on the total of (B) and (C), of the catalyst (E) capable of promoting the reaction between (B) and (C), and 30-160 parts by weight of (D) an inorganic hydrate.

5. A flame-retardant resin composition according to any one of Claims 1-4, wherein the thermoplastic resin (A) is a polyethylene, a modified polyethylene, a polypropylene, a modified polypropylene, a polystyrene resin or a polyphenylene ether resin.

6. A flame-retardant resin composition according to any one of Claims 1-5, wherein the halogen-free flame-retardant compound (C) is a phosphoric acid ester or a polyphosphoric acid salt each having a functional group selected from the group consisting of amino group, hydroxyl group and carboxyl group.

7. A flame-retardant resin composition according to any one of Claims 1-5, wherein the halogen-free flame-retardant compound (C) is boric acid or zinc borate.

8. A flame-retardant resin composition according to any one of Claims 1-5, wherein the halogen-free flame-retardant compound (C) is at least one compound selected from the group consisting of melamine, a melamine derivative, guanidine and a guanidine derivative.

9. A flame-retardant resin composition according to any one of Claims 1-8, wherein the inorganic hydrate (D) is magnesium hydroxide, aluminum hydroxide or calcium hydroxide.

10. Shaped articles comprising a flame-retardant resin composition according to any one of Claims 1 to 9.

## Patentansprüche

1. Eine flammhemmende Harzzusammensetzung, erhältlich durch Schmelzkneten von 100 Gew.-Teilen von (A) einem thermoplastischen Harz und 5 bis 100 Gew.-Teilen eines Schmelzreaktionsprodukts zwischen (B) mindestens einem Epoxy-modifizierten Harz und (C) mindestens einer halogenfreien flammhemmenden Verbindung, wobei das genannte mindestens eine Epoxy-modifizierte Harz (B) ausgewählt ist, aus der Gruppe bestehend aus einem Epoxy-modifizierten Polyolefinharz mit Epoxy-Gruppen im Molekül, einem Epoxid eines hydrierten Block-Copolymers, erhalten durch Hydrieren eines Block-Copolymers, umfassend mindestens einen Polymer-Block, hauptsächlich zusammengesetzt aus einer Vinylaromatischen Verbindung und mindestens einem Polymer-Block, hauptsächlich zusammengesetzt aus einer konjugierten Dien-Verbindung, einem Epoxid eines Terblock-Copolymers, umfassend einen Polymer-Block, hauptsächlich zusammengesetzt aus einem Acrylharz, mindestens einem Polymer-Block, hauptsächlich zusammengesetzt aus einer konjugierten Dien-Verbindung und mindestens einem Polymer-Block, hauptsächlich zusammengesetzt aus einer Vinyl-aromatischenen Verbindung, und einem Epoxid eines Acrylharzes, und wobei die genannte mindestens eine halogenfreie flammhemmende Verbindung (C) ausgewählt ist aus der Gruppe bestehend aus Phenolharz und phosphor-, stickstoff- und borhaltigen Verbindungen mit Epoxy-reaktiven funktionalen Gruppen.

2. Eine flammhemmende Harzzusammensetzung nach Anspruch 1, erhältlich durch Schmelzkneten von 100 Gew.-Teilen des thermoplastischen Harzes (A), 5 bis 100 Gew.-Teilen eines Schmelzreaktionsprodukts zwischen 20 bis 80 Gew.-% des Epoxy-modifizierten Harzes (B) und 80 bis 20 Gew.-% der halogenfreien flammhemmenden Verbindung (C), und 30 bis 160 Gew.-Teilen von (D) einem anorganischen Hydrat.

3. Eine flammhemmende Harzzusammensetzung nach Anspruch 1, erhältlich durch Schmelzkneten von 100 Gew.-Teilen des thermoplastischen Harzes (A) und 5 bis 100 Gew.-Teilen eines Schmelzreaktionsprodukts von 20 bis 80 Gew.-% des Epoxy-modifizierten Harzes (B) und 80 bis 20 Gew.-% der halogenfreien flammhemmenden Verbindung (C) und 0,01 bis 5 Gew.-%, basierend auf dem gesamten von (B) und C), von (E) mindestens einem Katalysator, der in der Lage ist die Reaktion zwischen (B) und (C) zu fördern, ausgewählt aus der Gruppe bestehend aus einem Imidazol, einem Amin und einem Derivat davon, und einem organischen Phosphin und Derivat davon.

4. Eine flammhemmende Harzzusammensetzung nach Anspruch 3, erhältlich durch Schmelzkneten von 100 Gew.-Teilen des thermoplastischen Harzes (A), 5 bis 100 Gew.-Teilen des Schmelzreaktionsprodukts von 20 bis 80 Gew.-% des Epoxy-modifizierten Harzes (B), 80 bis 20 Gew.-% der halogenfreien flammhemmenden Verbindung (C), und 0,01 bis 5 Gew.-%, basierend auf dem Gesamten von (B) und (C) des Katalysators (E), der in der Lage ist die Reaktion zwischen (B) und (C) zu fördern und 30 bis 160 Gew.-Teilen von (D), einem anorganischen Hydrat.

5. Eine flammhemmende Harzzusammensetzung nach einem der Ansprüche 1 bis 4, wobei das thermoplastische Harz (A) ein Polyethylen, ein modifiziertes Polyethylen, ein Polypropylen, ein modifiziertes Polypropylen, ein Polystyrolharz oder ein Polyphenylenetherharz ist.

6. Eine flammhemmende Harzzusammensetzung nach einem der Ansprüche 1 bis 5, wobei die halogenfreie flammhemmende Verbindung (C) ein Phosphorsäureester oder ein Polyphosphorsäuresalz ist, wobei jedes eine funktionale Gruppe, ausgewählt aus der Gruppe bestehend aus Amino-Gruppe, Hydroxyl-Gruppe und Carboxyl-Gruppe, hat.

7. Eine flammhemmende Harzzusammensetzung nach einem der Ansprüche 1 bis 5, wobei die halogenfreie flammhemmende Verbindung (C) Borsäure oder Zinkborat ist.

8. Eine flammhemmende Harzzusammensetzung nach einem der Ansprüche 1 bis 5, wobei die halogenfreie flammhemmende Verbindung (C) mindestens eine Verbindung ausgewählt aus der Gruppe bestehend aus Melamin, einem Melamin-Derivat, Guanidin und einem Guanidin-Derivat ist.

9. Eine flammhemmende Harzzusammensetzung nach einem der Ansprüche 1 bis 8, wobei das anorganische Hydrat (D) Magnesiumhydroxid, Aluminiumhydroxid oder Calciumhydroxid ist.

10. Formkörper, umfassend eine flammhemmende Harzzusammensetzung nach einem der Ansprüche 1 bis 9.

## Revendications

1. Composition de résine ignifugée pouvant être obtenue par malaxage à l'état fondu de 100 parties en poids de (A) une résine thermoplastique et 5 à 100 parties en poids d'un produit de réaction en masse fondue entre (B) au moins une résine à modification époxy et (C) au moins un composé ignifugeant non halogéné, ladite ou lesdites résines à modification époxy (B) étant choisies parmi une résine de polyoléfine à modification époxy ayant des groupes époxy dans sa molécule, un époxyde d'un ccpolymère séquencé hydrogéné obtenu par hydrogénation d'un copolymère séquencé comprenant au moins une séquence polymère composée principalement d'un composé aromatique vinylique et au moins une séquence polymère composée principalement d'un composé diène conjugué, un époxyde d'un terpolymère séquencé comprenant une séquence polymère composée principalement d'une résine acrylique, au moins une séquence polymère composée principalement d'un composé diène conjugué et au moins une séquence polymère composée principalement d'un composé aromatique vinylique, et un époxyde d'une résine acrylique, ledit ou lesdits composés ignifugeants non halogénés (C) étant choisis parmi une résine phénolique et des composés contenant du phosphore, de l'azote et du bore ayant des groupes fonctionnels réagissant avec le groupe époxy.

2. Composition de résine ignifugée selon la revendication 1 pouvant être obtenue par malaxage à l'état fondu de 100 parties en poids d'une résine thermoplastique (A), 5 à 100 parties en poids d'un produit de réaction en masse fondue entre 20 et 80 % en poids de la résine à modification époxy (B) et 80 à 20 % en poids du composé ignifugeant non halogéné (C) et 30 à 160 parties en poids de (D) un hydrate minéral.

3. Composition de résine ignifugée selon la revendication 1 pouvant être obtenue par malaxage à l'état fondu de 100 parties en poids de la résine thermoplastique (A) et 5 à 100 parties en poids d'un produit de réaction en masse fondue de 20 à 80 % en poids de la résine à modification époxy (B), 80 à 20 % en poids du composé ignifugeant non halogéné (C) et 0,01 à 5 % en poids, relativement au total de (B) et (C), de (E) au moins un catalyseur capable de promouvoir la réaction entre (B) et (C) choisi parmi un imidazole, une amine et un dérivé de celle-ci et une phosphine organique et un dérivé de celle-ci.

4. Composition de résine ignifugée selon la revendication 3 pouvant être obtenue par malaxage à l'état fondu de 100 parties en poids de la résine thermoplastique (A) et 5 à 100 parties en poids d'un produit de réaction en masse fondue de 20 à 80 % en poids de la résine à modification époxy (B), 80 à 20 % en poids du composé ignifugeant non halogéné (C) et 0,01 à 5 % en poids, relativement au total de (B) et (C), du catalyseur (E) capable de promouvoir la réaction entre (B) et (C) et 30 à 160 parties en poids de (D) un hydrate minéral.

5. Composition de résine ignifugée selon l'une quelconque des revendications 1 à 4, dans laquelle la résine thermoplastique (A) est un polyéthylène, un polyéthylène modifié, un polypropylène, un polypropylène modifié, une résine de polystyrène ou une résine de poly(éther de phénylène).

6. Composition de résine ignifugée selon l'une quelconque des revendications 1 à 5, où le composé ignifugeant non halogéné (C) est un ester d'acide phosphorique ou un sel d'acide polyphosphorique ayant chacun un groupe fonctionnel choisi parmi un groupe amino, un groupe hydroxy et un groupe carboxy.

7. Composition de résine ignifugée selon l'une quelconque des revendications 1 à 5, où le composé ignifugeant non halogéné (C) est l'acide borique ou le borate de zinc.

8. Composition de résine ignifugée selon l'une quelconque des revendications 1 à 5, où le composé ignifugeant non halogéné (C) est au moins un composé choisi parmi la mélamine, un dérivé de mélamine, la guanidine et un dérivé de guanidine.

9. Composition de résine ignifugée selon l'une quelconque des revendications 1 à 8, où l'hydrate minéral (D) est l'hydroxyde de magnésium, l'hydroxyde d'aluminium ou l'hydroxyde de calcium.

10. Articles façonnés comprenant une composition de résine ignifugée selon l'une quelconque des revendications 1 à 9.
